# EUROPÄISCHE PATENTSCHRIFT

(11) **EP 0 834 444 B1**
(45) Veröffentlichungstag und Bekanntmachung des Hinweises auf die Patenterteilung: **29.12.1999**
(21) Anmeldenummer: 97116346.4
(22) Anmeldetag: 19.09.1997
(51) Int. Cl.: B62D 31/00

(54) **Kraftfahrzeug mit einer Karosserietragstruktur**
Motor vehicle with a body structure
Structure d'une carrosserie d'un véhicule à moteur

(30) Priorität: 26.09.1996 DE 19639565
(43) Veröffentlichungstag der Anmeldung: 08.04.1998
(73) Patentinhaber: DaimlerChrysler AG, 70567 Stuttgart (DE)
(72) Erfinder: Baumann, Karl-Heinz, 71149 Bondorf (DE)

(56) Entgegenhaltungen:
- DE-A- 4 220 438
- DE-A- 4 227 967
- DE-C- 4 022 137
- US-A- 3 888 502

## Beschreibung

Die Erfindung betrifft ein Kraftfahrzeug mit einer Karosserietragstruktur, die eine Fahrgastzelle aufweist, sowie mit einer vor der Fahrgastzelle angeordneten, in Fahrzeuglängsrichtung wirksamen Frontknautschzone und einer hinter der Fahrgastzelle angeordneten, in Fahrzeuglängsrichtung wirksamen Heckknautschzone.

Solche Kraftfahrzeuge sind in Form von Personenkraftwagen allgemein bekannt. Bei einem Frontalaufprall des Personenkraftwagens oder bei einem Heckaufprall auf den Personenkraftwagen dient die Frontknautschzone bzw. die Heckknautschzone dazu, Aufprallenergie soweit abzubauen, daß die Fahrgastzelle selbst nicht deformiert wird. Die Fahrgastzelle ist gegenüber den Knautschzonen erheblich steifer gestaltet und verhält sich im wesentlichen starr. Insbesondere bei sehr schweren Frontalaufprallbelastungen kann sich auch der fahrer- und/oder beifahrerseitige Frontbereich der Fahrgastzelle verformen, wodurch der Überlebensraum für die frontseitigen Fahrzeuginsassen erheblich reduziert werden kann.

Aus der DE 42 20 438 A1 ist ein Kompaktauto bekannt, das einen flexiblen Mittelteil aufweist, der je nach Bedarf ein- oder ausgefahren werden kann. Im ausgefahrenen Zustand schafft der Mittelteil Platz für eine zusätzliche Sitzbank oder für zusätzlichen Stauraum.

Aufgabe der Erfindung ist es, ein Kraftfahrzeug der eingangs genannten Art zu schaffen, das insbesondere bei schweren Aufprallunfällen einen vergrößerten Überlebensraum für die Fahrzeuginsassen zur Verfügung stellt.

Diese Aufgabe wird dadurch gelöst, daß der Fahrgastzelle wenigstens eine in die Karosserietragstruktur eingebundene und ebenfalls in Fahrzeuglängsrichtung wirksame mittlere Knautschzone zugeordnet ist. Die erfindungsgemäße Lösung sieht somit vorteilhaft einen Energieabbau innerhalb der Fahrgastzelle selbst vor. Dadurch muß eine entsprechende Aufprallbelastung nicht ausschließlich durch die Frontknautschzone oder durch die Heckknautschzone aufgenommen werden, so daß insbesondere bei schweren Frontalaufprallbelastungen Intrusionen des Frontbereiches der Fahrgastzelle und damit eine Reduzierung des Überlebensraumes der frontseitigen Fahrzeuginsassen vermieden werden kann. Selbstverständlich ist die wenigstens eine mittlere Knautschzone derart innerhalb der Fahrgastzelle angeordnet, daß sich aufgrund dieser Knautschzone auch der Überlebensraum für Fahrzeuginsassen in einem Fondbereich nicht wesentlich reduziert. Die erfindungsgemäße Lösung hat zum einen wesentliche Vorteile bei sehr schweren Aufprallbelastungen, indem Intrusionen im Frontbereich der Fahrgastzelle durch eine Energieaufnahme im Bereich der wenigstens einen mittleren Knautschzone innerhalb der Fahrgastzelle selbst vermieden werden. Zum anderen ist die erfindungsgemäße Lösung auch dazu geeignet, die Kompatibilität zwischen sehr großen und sehr kleinen Personenkraftwagen zu verbessern, da beim Einsatz der erfindungsgemäßen Lösung den sehr großen Personenkraftwagen ein vergrößerter Energieaufnahmeweg zur Verfügung steht, der die Aufprallbeschleunigungen für einen kleinen Personenkraftwagen bei einem Zusammenprall mit diesem sehr großen Personenkraftwagen reduziert. Durch die erfindungsgemäße Lösung wird somit eine erhebliche Verbesserung der passiven Sicherheit eines Kraftfahrzeugs erzielt.

In Ausgestaltung der Erfindung ist die wenigstens eine mittlere Knautschzone im Übergangsbereich zwischen in Fahrzeuglängsrichtung hintereinander angeordneten Sitzpositionen der Fahrgastzelle wenigstens auf Höhe der Bodenstruktur der Fahrgastzelle vorgesehen. Diese Ausgestaltung geht davon aus, daß im Übergangsbereich zwischen hintereinander angeordneten Sitzpositionen ein Raum vorhanden ist, der für den Überlebensraum der jeweiligen Fahrzeuginsassen auf den hinteren Sitzpositionen nicht benötigt wird, so daß sich das Vorsehen einer mittleren Knautschzone in diesem Bereich nicht nachteilig auf die hinteren Fahrzeuginsassen auswirkt. Bei einem viersitzigen Personenkraftwagen befindet sich die mittlere Knautschzone im Übergangsbereich zwischen den frontseitigen und den fondseitigen Sitzpositionen. Bei einer Großraumlimousine, die mehr als zwei hintereinander angeordnete Sitzreihen aufweisen kann, können auch zwei oder mehr mittlere Knautschzonen jeweils in den Überegangsbereichen zwischen den in Fahrzeuglängsrichtung hintereinander anschließenden Sitzpositionen vorgesehen sein.

In weiterer Ausgestaltung der Erfindung ist der Formänderungswiderstand der wenigstens einen mittleren Knautschzone derart auf die Front- und Heckknautschzonen abgestimmt, daß die mittlere Knautschzone erst dann wirksam wird, wenn wenigstens die Front- oder die Heckknautschzone zumindest teilweise zur Energieaufnahme herangezogen worden ist. Dadurch wird gewährleistet, daß die mittlere Knautschzone ausschließlich bei schweren Aufprallbelastungen beansprucht wird, so daß bei kleinen oder mittleren Aufprallbelastungen die Fahrgastzelle unverändert steif bleibt und somit lediglich Reparaturarbeiten bezüglich der Front- oder der Heckknautschzone notwendig sind.

In weiterer Ausgestaltung der Erfindung weist die mittlere Knautschzone Schwächungen an definierten Stellen der Bodenstruktur auf. Die Schwächungen können entweder durch eine entsprechend nachgiebige Gestaltung von Trägerteilen der Bodenstruktur an den definierten Stellen, oder aber durch eine zusätzliche Versteifung der übrigen maßgeblichen Bereiche der Bodenstruktur erzielt werden, wodurch automatisch die unversteiften Bereiche Schwächungen im Sinne dieser Ausgestaltung bilden.

In weiterer Ausgestaltung der Erfindung sind als Schwächungen mehrere in Fahrzeuglängsrichtung hintereinanderliegende Deformationssicken vorgesehen, die in die Bodenstruktur der Fahrgastzelle integriert sind. Zur Bodenstruktur zählen sowohl die seitlichen Längsschweller, als auch der Fahrzeugboden und gegebenenfalls ein für eine Kardanwelle vorgesehener Mitteltunnel. Das Vorsehen von Deformationssicken innerhalb der aus Blechpreßteilen hergestellten Bodenstruktur ist ohne größeren kostenmäßigen Aufwand möglich. Dadurch, daß Deformationssicken lediglich im Bereich der Bodenstruktur, nicht jedoch im Bereich der Dachstruktur vorgesehen sind, wird die Fahrgastzelle lediglich im Bereich der Bodenstruktur, auf dessen Höhe die Hauptkräfte eingeleitet werden, zusammengeschoben und knickt im Bereich der Dachstruktur nach oben aus. Dadurch kippt der in der Aufprallbelastungsrichtung hintere Teil der Fahrgastzelle um einen bestimmten Betrag ab. Dies hat bei einem Frontalaufprall Vorteile, da ein Submarining-Effekt für die Fondinsassen aufgrund der vergrößerten Schrägstellung der Sitzflächen der Fondsitze durch das Abkippen des fondseitigen Teiles der Fahrgastzelle reduziert wird.

In weiterer Ausgestaltung der Erfindung sind die Deformationssicken der Bodenstruktur im Übergangsbereich zwischen seitlichen B-Säulen und einem Fondsitzquerträger angeordnet. Dies ist eine besonders günstige Positionierung der Deformationssicken, da auch bei einer Deformation in diesem Bereich für die Fondinsassen noch ein ausreichender Überlebensraum zur Verfügung steht.

In weiterer Ausgestaltung der Erfindung weist die Bodenstruktur Deformationselemente auf, die im Bereich von den den Vorderrädern zugewandten Stirnenden von Längsschwellern positioniert sind. Diese Ausgestaltung ist insbesondere bei einem versetzten Frontalaufprall vorteilhaft, da das entsprechend belastete Vorderrad frühzeitig das vorzugsweise als Prallelement ausgestaltete Deformationselement beaufschlagt und somit die Aufprallkräfte auf den zugeordneten seitlichen Längsschweller konzentriert. Da in diesem Längsschweller auch die entsprechenden Schwächungen für die mittlere Knautschzone vorgesehen sind, wird die Verformung dieser Knautschzone durch diese Ausgestaltung begünstigt.

Weitere Vorteile und Merkmale der Erfindung ergeben sich aus den Unteransprüchen. Nachfolgend sind bevorzugte Ausführungsbeispiele der Erfindung beschrieben und anhand der Zeichnungen dargestellt.
- Fig. 1: zeigt schematisch eine Seitenansicht einer Ausführungsform eines erfindungsgemäßen Personenkraftwagens, der zusätzlich zu einer Front- und einer Heckknautschzone mit einer mittleren Knautschzone versehen ist;
- Fig. 2: eine weitere Ausführungsform des erfindungsgemäßen Personenkraftwagens, der mit einer sich zu einer Dachstruktur nach oben keilförmig verringernden mittleren Knautschzone im Bereich einer Fahrgastzelle versehen ist,
- Fig. 3: den Personenkraftwagen nach Fig. 2 nach einer Frontalaufprallbelastung durch ein Hindernis,
- Fig. 4: schematisch eine Draufsicht auf eine Bodenstruktur einer Karosserietragstruktur eines erfindungsgemäßen Personenkraftwagens,
- Fig. 5: die deformierte Bodenstruktur bei einem zentrischen Frontalaufprall,
- Fig. 6: die deformierte Bodenstruktur nach Fig. 4 bei einem asymmetrisch versetzten Frontalaufprall,
- Fig. 7: eine perspektivische Darstellung eines Bodenbereiches einer Karosserietragstruktur für einen erfindungsgemäßen Personenkraftwagen und
- Fig. 8: in perspektivischer Darstellung eine Seitenwandstruktur für die Karosserietragstruktur des Personenkraftwagens nach Fig. 7.

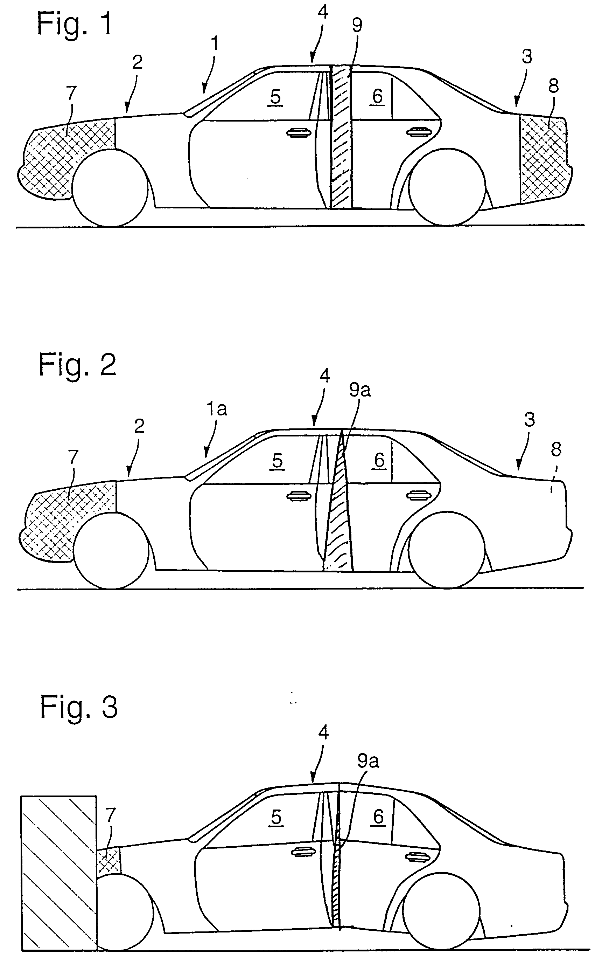

Ein Personenkraftwagen 1 nach Fig. 1 stellt eine viertürige Stufenhecklimousine dar, deren Fahrzeugkarosserie einen Vorbaubereich 2, einen Heckbereich 3 sowie eine zwischen dem Vorbaubereich 2 und dem Heckbereich 3 angeordnete Fahrgastzelle 4 aufweist. Die Fahrgastzelle 4 ist in einen Frontbereich 5 und einen Fondbereich 6 unterteilt, die jeweils mit front- und fondseitigen Sitzpositionen versehen sind. Ein Frontabschnitt des Vorbaubereiches 2 der Fahrzeugkarosserie ist als Frontknautschzone 7 ausgebildet. Ein heckseitiger Abschnitt des Heckbereiches 3 der Fahrzeugkarosserie ist als Heckknautschzone 8 gestaltet. In einem Übergangsbereich zwischen dem Frontbereich 5 und dem Fondbereich 6 der Fahrgastzelle 4, und zwar insbesondere in einem unmittelbar an eine B-Säule anschließenden Karosserieabschnitt der Fahrgastzelle 4 ist eine mittlere Knautschzone 9 vorgesehen, die erst bei schweren Aufprallbelastungen, die zu einer Reduzierung des Überlebensraumes innerhalb des Front- oder Fondbereiches 5, 6 für Fahrzeuginsassen führen könnten, wirksam wird. Die mittlere Knautschzone 9 wird somit erst zu einem Zeitpunkt wirksam, zu dem sich entweder die Frontknautschzone 7 oder die Heckknautschzone 8 bereits zumindest teilweise deformiert hat. Die Frontknautschzone 7 und die Heckknautschzone 8 stellen somit Primärknautschzonen dar, die mittlere Knautschzone 9 bildet eine Sekundärknautschzone. Die mittlere Knautschzone 9 wird durch energieabsorbierende Deformationselemente oder -abschnitte erzielt, die in die Karosserietragstruktur der Fahrgastzelle 4 integriert sind. Der Formänderungswiderstand dieser energieabsorbierenden Deformationselemente oder -abschnitte ist auf die Formänderungswiderstände der Front- oder der Heckknautschzone 7, 8 derart abgestimmt, daß die Deformationselemente oder -abschnitte sich wie starre Bauelemente verhalten, solange lediglich leichte oder mittlere Aufprallbelastungen auf die Frontknautschzone 7 oder auf die Heckknautschzone 8 ausgeübt werden.

Der Personenkraftwagen 1a nach den Fig. 2 und 3 entspricht im wesentlichen dem Personenkraftwagen 1 nach Fig. 1. Gleiche Funktionsbereiche und Strukturteile des Personenkraftwagens 1a sind mit den gleichen Bezugszeichen wie bei dem Personenkraftwagen 1 versehen, so daß sich diesbezüglich eine nähere Erläuterung erübrigt. Auch die Fahrgastzelle 4 des Personenkraftwagens 1a ist mit einer mittleren Knautschzone 9a versehen, die sich jedoch im Gegensatz zur Knautschzone 9, die von der Bodenstruktur bis zur Dachstruktur der Fahrgastzelle 4 die gleichen Längenabmessungen in Fahrzeuglängsrichtung aufweist, von der Bodenstruktur zur Dachstruktur hin keilförmig reduziert. Diese keilförmige Reduzierung der Knautschzone 9a ergibt sich durch Deformationselemente im Bereich der Bodenstruktur der Fahrgastzelle 4. Die Dachstruktur der Fahrgastzelle 4 selbst ist nicht Teil der Knautschzone 9a, da sie weder Deformationselemente noch Deformationsabschnitte aufweist. Bei einem Frontalaufprall auf ein Hindernis wird somit nach der vollständigen Deformation der Frontknautschzone 7 die mittlere Knautschzone 9a zur Energieaufnahme herangezogen, wobei aufgrund des Vorhandenseins von Deformationselementen oder -abschnitten lediglich im Bereich der Bodenstruktur ein Abknicken der Fahrgastzelle 4 auf Höhe der mittleren Knautschzone 9a entsteht. Durch das Abknicken knickt die Dachstruktur nach oben aus und der Fondbereich 6 der Fahrgastzelle 4 knickt einschließlich des Heckbereiches 3 schräg nach hinten ab. Durch diese Schrägstellung des Fondbereiches 6 wird auch die Sitzfläche der nicht dargestellten Fondsitze rampenartig angestellt, wodurch ein Submarining-Effekt für auf diesen Sitzflächen befindliche Fondinsassen reduziert wird.

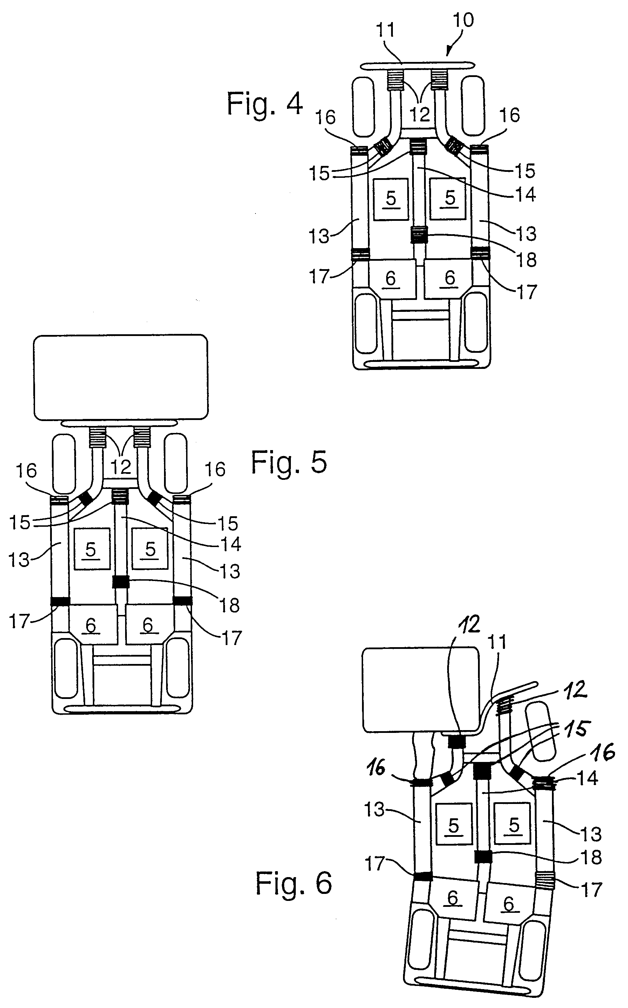

Beim Ausführungsbeispiel nach den Fig. 4 bis 6 ist eine Bodenstruktur als Teil einer Karosserietragstruktur eines Personenkraftwagens vorgesehen, die frontseitig einen Stoßfängerbiegeträger 11 aufweist, der mit Hilfe von energieabsorbierenden Deformationselementen 12 an zwei Vorbaulängsträger angeschlossen ist. Die Deformationselemente 12 stellen einen Teil der Frontknautschzone des Personenkraftwagens dar. Auf Höhe der Fahrgastzelle weist die Bodenstruktur zu beiden Seiten jeweils einen Längsschweller 13 auf. Zwischen den Sitzpositionen des Frontbereiches 5 und des Fondbereiches 6 der Fahrgastzelle verläuft in Fahrzeuglängsrichtung ein Mitteltunnel 14, der zur Aufnahme einer Kardanwelle für einen Heckantrieb vorgesehen ist. Die Vorbaulängsträger münden durch schräg nach außen gekrümmte Längsträgerabschnitte in die Längsschweller 13, wobei in diese Längsträgerabschnitte zwei energieabsorbierende Deformationsabschnitte 15 eingebunden sind. Der Mitteltunnel 14 schließt an einen Vorbauquerträger ebenfalls unter Zwischenschaltung eines energieabsorbierenden Deformationsabschnittes 15 an. Die Längsschweller 13 weisen an ihren vorderen Stirnseiten, die auf die Vorderräder gerichtet sind, jeweils ein weiteres energieabsorbierendes Deformationselement 16 auf. Die mittlere Knautschzone im Übergangsbereich zwischen dem Frontbereich 5 und dem Fondbereich 6 des Fahrzeuginnenraumes der Fahrgastzelle wird auf Höhe der Längsschweller 13 durch jeweils einen energieabsorbierenden Deformationsabschnitt 17 gebildet, der jeweils in den zugeordneten Längsschweller 13 eingebunden ist. Der Mitteltunnel 14 ist etwa auf Höhe der nicht dargestellten B-Säulen ebenfalls mit einem energieabsorbierenden Deformationselement 18 versehen, das den Mitteltunnel 14 in einen vorderen und einen hinteren Teilabschnitt unterteilt.

Wie aus Fig. 5 erkennbar ist, werden die beschriebenen energieabsorbierenden Deformationselemente und -abschnitte 12 bis 18 bei einem zentrischen Frontalaufprall auf ein Hindernis - wie dargestellt - deformiert, wobei aufgrund der dargestellten Pfeile im Bereich der Deformationsabschnitte 17 und des Deformationselementes 18 erkennbar ist, daß durch die Aufteilung der Bodenstruktur im Bereich der Fahrgastzelle in einen vorderen und einen hinteren Teilbereich auch die Masse des den Fondbereich 6 tragenden Abschnitts der Fahrgastzelle für die Deformation der Deformationselemente 17 und 18 herangezogen wird. Bei einem seitlich versetzten, asymmetrischen Frontalaufprall des Personenkraftwagens gemäß Fig. 6 erfolgt ein seitliches Einknicken der Bodenstruktur, wobei der in der Draufsicht rechte Deformationsabschnitt 17 des rechten Längsschwellers 13 gedehnt und der linke Deformationsabschnitt 17 des linken Längsschwellers 13 auf Block komprimiert wird.

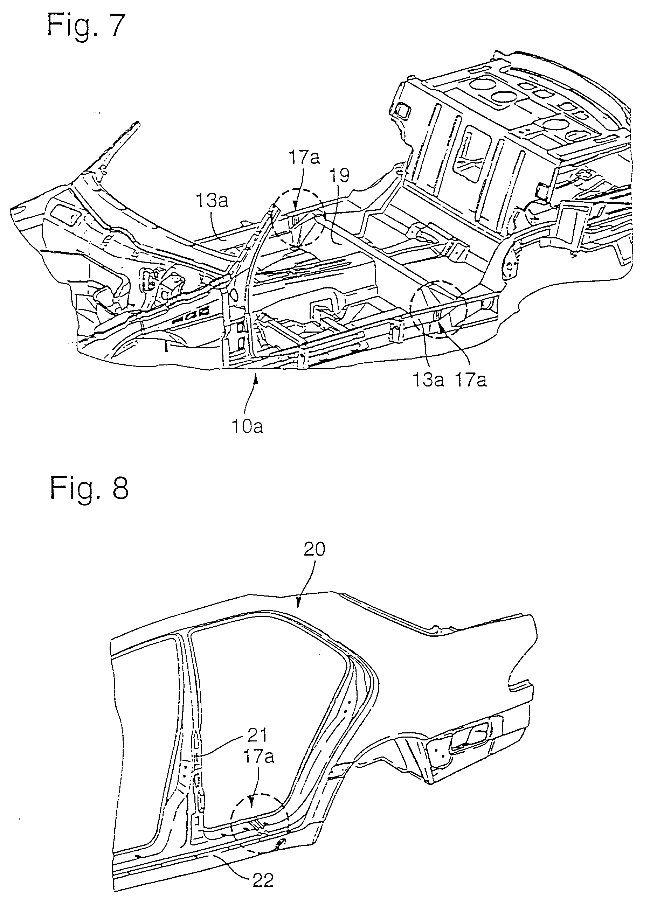

Beim Ausführungsbeispiel nach den Fig. 7 und 8 werden die energieabsorbierenden Deformationsabschnitte 17a in der Bodenstruktur des dargestellten Personenkraftwagens durch wenigstens zwei in Fahrzeuglängsrichtung hintereinander angeordnete Quersicken unmittelbar vor einem Fondsitzquerträger 19 realisiert, wobei die die Schwächung bewirkenden Quersicken sowohl in den Innenschalen der Längsschweller 13a der Bodenstruktur 10a nach Fig. 7 als auch in den in eine Seitenwand 20 der Fahrzeugkarosserie integrierten Außenschalen 22 der Längsschweller vorgesehen sind. Zur besseren Verdeutlichung der Lage der Quersicken 17a sind die Positionen dieser Deformationsabschnitte durch gestrichelte Kreise dargestellt.

## Patentansprüche

1. Personenkraftwagen mit einer Karosserietragstruktur, die eine Fahrgastzelle aufweist, sowie mit einer vor der Fahrgastzelle angeordneten, in Fahrzeuglängsrichtung wirksamen Frontknautschzone und einer hinter der Fahrgastzelle angeordneten, in Fahrzeuglängsrichtung wirksamen Heckknautschzone,
**dadurch gekennzeichnet, daß**
der Fahrgastzelle (4) wenigstens eine in die Karosserietragstruktur eingebundene und ebenfalls in Fahrzeuglängsrichtung wirksame mittlere knautschzone (9, 9a) zugeordnet ist.

2. Personenkraftwagen nach Anspruch 1,
**dadurch gekennzeichnet, daß**
die wenigstens eine mittlere Knautschzone (9, 9a) im Übergangsbereich zwischen in Fahrzeuglängsrichtung hintereinander angeordneten Sitzpositionen (5, 6) der Fahrgastzelle (4) wenigstens auf Höhe der Bodenstruktur (10, 10a) der Fahrgastzelle vorgesehen ist.

3. Personenkraftwagen nach Anspruch 2,
**dadurch gekennzeichnet, daß**
der Formänderungswiderstand der wenigstens einen mittleren Knautschzone (9, 9a; 17, 18; 17a) derart auf die Front- und Heckknautschzonen (7, 8; 11, 12) abgestimmt ist, daß die mittlere Knautschzone (9, 9a) erst dann wirksam wird, wenn wenigstens die Front- oder die Heckknautschzone (7, 8; 11, 12) zumindest teilweise zur Energieaufnahme herangezogen worden ist.

4. Personenkraftwagen nach wenigstens einem der vorhergehenden Ansprüche,
**dadurch gekennzeichnet, daß**
die wenigstens eine mittlere Knautschzone Schwächungen an definierten Stellen der Bodenstruktur aufweist.

5. Personenkraftwagen nach wenigstens einem der vorhergehenden Ansprüche,
**dadurch gekennzeichnet, daß**
als Schwächungen mehrere in Fahrzeuglängsrichtung hintereinanderliegende Deformationssicken (17a) vorgesehen sind, die in die Bodenstruktur (10a) der Fahrgastzelle integriert sind.

6. Personenkraftwagen nach Anspruch 5,
**dadurch gekennzeichnet, daß**
die Deformationssicken (17a) der Bodenstruktur (10a) im Übergangsbereich zwischen seitlichen B-Säulen (21) und einem Fondsitzquerträger (19) angeordnet sind.

7. Personenkraftwagen nach wenigstens einem der vorhergehenden Ansprüche,
**dadurch gekennzeichnet, daß**
die Bodenstruktur Deformationselemente (16) aufweist, die im Bereich von den den Vorderrädern zugewandten Stirnenden der Längsschweller (13) positioniert sind.

8. Personenkraftwagen nach wenigstens einem der vorhergehenden Ansprüche,
**dadurch gekennzeichnet, daß**
bei einem Heckantrieb in einer sich unterhalb der Bodenstruktur (10) der Fahrgastzelle erstreckenden Kardanwelle auf Höhe der mittleren Knautschzone ein Deformationselement angeordnet ist, dessen Formänderungswiderstand an die Knautschzone angepaßt ist.

9. Personenkraftwagen nach wenigstens einem der vorhergehenden Ansprüche,
**dadurch gekennzeichnet, daß**
seitliche Dachrahmen sowie eine Dachbeplankung einer Dachstruktur der Fahrgastzelle (4) auf Höhe der Knautschzone (9) integrierte Deformationsabschnitte aufweisen.

## Claims

1. Passenger vehicle with a bodywork chassis, which has a passenger compartment, and with a front crumple zone, which is arranged in front of the passenger compartment and is effective in the lengthwise direction of the vehicle, and a rear crumple zone which is disposed behind the passenger compartment and is effective in the lengthwise direction of the vehicle,
characterized in that
the passenger compartment (4) has at least one central crumple zone (9, 9a), which is built into the bodywork chassis, and also effective in the lengthwise direction of the vehicle, associated with it.

2. Passenger vehicle in accordance with claim 1,
characterized in that the minimum of one crumple zone (9, 9a), it being possible for there to more, is, in the area of transition between the seats (5, 6), of the passenger compartment (4), which are placed one pair behind the other, in the lengthwise direction of the vehicle, at least as high as the bottom structure (10, 10a) of the passenger compartment.

3. Passenger vehicle in accordance with claim 2,
characterized in that the deformation resistance of the minimum single central crumple zone (9, 9a; 17, 18; 17a) is adjusted to the front and rear crumple zones (7, 8; 11, 12), such that the central crumple zone (9, 9a) only comes into effect if at least the front and rear crumple zones (7, 8; 11,12) have, at least partly, pressure applied to them.

4. Passenger vehicle in accordance with at least one of the preceding claims,
characterized in that the minimum of one central crumple zones has weaknesses at specific points in the bottom structure.

5. Passenger vehicle in accordance with at least one of the preceding claims,
characterized in that several deformation corrugations (17a) are provided, in the lengthwise direction of the vehicle, one behind the other, these corrugations being integrated into the bottom structure (10a) of the passenger compartment.

6. Passenger vehicle in accordance with claim 5,
characterized in that the deformation corrugations (17a) of the bottom structure (10a) are disposed in the transition area between lateral 'B'-form columns (21) and a back seat transverse support (19).

7. Passenger vehicle in accordance with at least one of the preceding claims,
characterized in that the bottom structure has deformation elements (16) which are positioned in the area of the front ends, of the longitudinal members (13), facing the front wheels.

8. Passenger vehicle in accordance with at least one of the preceding claims,
characterized in that, in the case of rear drive, a deformation element is disposed, in a drive shaft which extends below the bottom structure (10) of the passenger compartment, at the level of the central crumple zone, the resistance, to deformation, of this drive shaft, being adapted to the crumple zone.

9. Passenger vehicle in accordance with at least one of the preceding claims,
characterized in that lateral roof frames and a roof covering, of a roof structure of the passenger compartment, have deformation sections built into them, at the height of the crumple zone (9).

## Revendications

1. Voiture de tourisme comportant une structure portante de carrosserie, qui possède un habitacle, ainsi qu'une zone déformable avant, qui est disposée en avant de l'habitacle et qui est active dans la direction longitudinale du véhicule, et une zone de déformation arrière, qui est disposée en arrière de l'habitacle et est active dans la direction longitudinale du véhicule, caractérisée en ce qu'au moins une zone déformable médiane (9, 9a), qui est délimitée dans la structure portante de la carrosserie et est active également dans la direction longitudinale du véhicule, est associée à l'habitacle (4).

2. Voiture de tourisme selon la revendication 1, caractérisée en ce qu'au moins une zone déformable médiane (9, 9a) est prévue dans la zone de jonction entre des positions de sièges (5, 6), situées l'une derrière l'autre dans la direction longitudinale du véhicule, de l'habitacle (4) au moins à hauteur de la structure (10, 10a) du plancher de l'habitacle.

3. Voiture de tourisme selon la revendication 2, caractérisée en ce que la résistance à la déformation de l'au moins une zone déformable médiane (9, 9a, 17, 18 ; 17a) est réglée sur les zones déformables avant et arrière (7, 8 ; 11, 12) de telle sorte que la zone déformable médiane (9, 9a) devient active uniquement lorsqu'au moins la zone déformable avant ou la zone déformable arrière (7, 8 ; 11, 12) a été utilisée au moins en partie pour l'absorption de l'énergie.

4. Voiture de tourisme selon au moins l'une des revendications précédentes, caractérisée en ce que l'au moins une zone déformable médiane présente des affaiblissements au niveau d'emplacements définis de la structure du plancher.

5. Voiture de tourisme selon au moins l'une des revendications précédentes, caractérisée en ce qu'il est prévu, comme affaiblissements, plusieurs moulures de déformation (17a), qui sont disposées les unes derrière le autres dans la direction longitudinale du véhicule et sont intégrées dans la structure (10a) du plancher de l'habitacle.

6. Voiture de tourisme selon la revendication 5, caractérisée en ce que les moulures de déformation (17a) de la structure (10a) du plancher sont disposées dans la zone de jonction entre des montants B latéraux (21) et une traverse de siège arrière (19).

7. Voiture de tourisme selon au moins l'une des revendications précédentes, caractérisée en ce que la structure du plancher comporte des éléments de déformation (16), qui sont positionnés dans la zone des extrémités frontales, tournées vers les roues avant, des longerons (13).

8. Voiture de tourisme selon au moins l'une des revendications précédentes, caractérisée en ce que dans le cas d'une transmission arrière, un arbre de cardan, qui s'étend au-dessous de la structure (10) du plancher de l'habitacle, est disposé à hauteur de la zone déformable médiane d'un élément de déformation, dont la résistance à la déformation est adaptée à la zone déformable.

9. Voiture de tourisme selon au moins l'une des revendications précédentes, caractérisée en ce que des cadres latéraux de toit ainsi qu'un panneau d'une structure de toit de l'habitacle (4) possèdent des sections de déformation intégrées à hauteur de la zone déformable (9).
